(19)

Europäisches
Patentamt
European
Patent Office
Office européen
des brevets

(11) **EP 3 358 023 A1**

(12) **EUROPEAN PATENT APPLICATION**
published in accordance with Art. 153(4) EPC

(43) Date of publication:
**08.08.2018 Bulletin 2018/32**

(21) Application number: **16850759.8**

(22) Date of filing: **20.06.2016**

(51) Int Cl.:
*C21D 11/00* (2006.01)       *C21D 1/18* (2006.01)
*C22C 38/00* (2006.01)       *C22C 38/06* (2006.01)

(86) International application number:
**PCT/JP2016/068223**

(87) International publication number:
**WO 2017/056582 (06.04.2017 Gazette 2017/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2015 JP 2015192754**

(71) Applicant: **Hitachi Metals, Ltd.**
**Tokyo 108-8224 (JP)**

(72) Inventors:
• **HIRAMOTO, Atsuhiro**
**Yasugi-shi**
**Shimane 692-8601 (JP)**
• **YASUI, Atsushi**
**Yasugi-shi**
**Shimane**
**6928601 (JP)**

(74) Representative: **Beetz & Partner mbB**
**Patentanwälte**
**Steinsdorfstraße 10**
**80538 München (DE)**

(54) **METHOD FOR DERIVING COOLING TIME WHEN QUENCHING STEEL MATERIAL, METHOD FOR QUENCHING STEEL MATERIAL, AND METHOD FOR QUENCHING AND TEMPERING STEEL MATERIAL**

(57)     Provided are a method for deriving a cooling time when quenching a steel material, a method for quenching a steel material and a method for quenching and tempering a steel material. The method for deriving a cooling time comprises: step A of cooling a test specimen heated to a cooling initiation temperature Ts under a cooling condition C and measuring the cooling time t until the temperature of a center portion of the test specimen reaches a cooling termination temperature Te; step B of determining a function f which is defined by t = f(V/S) and which is satisfied by data including the volume V, the surface area S and the cooling time t of the test specimen obtained in step A; and step C of substituting the volume $V_1$ and the surface area $S_1$ of the shape $F_1$ of a steel material to be actually quenched in the relational expression t = f(V/S), and calculating a cooling time $t_1$. The method for quenching a steel material comprises: actually heating the steel material to be quenched to the cooling initiation temperature Ts; cooling only for the cooling time $t_1$ under the cooling condition C; and then stopping cooling under the cooling condition C. The method for quenching and tempering a steel material comprises tempering the steel material quenched by this method.

FIG.1

**Description**

TECHNICAL FIELD

The present invention relates to a method for deriving a cooling time for quenching a steel material, to a method for quenching the steel material, and a method for quenching and tempering the steel material.

BACKGROUND ART

In general, a steel material has high hardness and toughness. The steel is hardened, for example, by quenching. Quenching is a process of rapidly cooling a steel material that has been heated at a temperature in an austenite phase range, so as to subject the steel to martensitic transformation. The quenched steel can have toughness through subsequent tempering . Tempering is a process of reheating the quenched steel at an appropriate temperature below the austenitic phase range.

The steel material to be quenched and tempered may have a shape such as slab, bloom, or billet, as well as a shape of a product such as various jigs, tools, molds, or structural components. When the steel material has a large size or a complicated shape, a central portion of the steel material is, in some cases, cooled at a small cooling rate during the quenching with respect to a target cooling rate while a surface of the steel is cooled at a high rate. In the case, the central portion may be insufficiently martensitic-transformed. Therefore, it is important in actual quenching of a steel material to determine, in advance, a cooling condition capable of achieving a cooling rate not smaller than the target cooling rate over an entire steel material according to a size and a shape of the steel material.

An example of factors for determining the cooling condition is a kind of a cooling medium. A cooling method according to the cooling medium includes: air quenching (blast cooling) using blown air or the like; water quenching using water; hot bath quenching using oil, salt bath, molten metal or the like; and gas quenching using an inert gas such as nitrogen or argon (see Patent Literatures 1 to 3). Also, a temperature of the cooling medium is a factor for determining the cooling condition. The factors include a volume and a speed of the air blown in a case of the blast cooling and a flow rate (or pressure) of inert gas in a case of the gas quenching.

In some cases of actual quenching, the cooling under the cooling condition is stopped when a temperature of the steel material reaches a certain instructed temperature in the cooling process. For example, while a rapid cooling at a cooling rate not smaller than a target cooling rate is applied in a first half of cooling, a slower cooling is applied in a second half of cooling to avoid cracking of the steel material or other reasons. In the case, the cooling is temporarily stopped between the first cooling and the second cooling. Therefore, it is also important to control a temperature of the steel material during the cooling for quenching, in addition to setting the cooling condition in advance.

However, it is not practical to directly measure a temperature at a central portion of the steel material during cooling in a factory operation. Accordingly, the temperature of the central portion of the steel material is estimated in an actual quenching, from a relationship between a cooling time length and a temperature at the central portion of the steel material during the cooling at a current cooling rate, by acquiring what cooling rate is obtained by the current cooling condition. Thus, it is judged by the current cooling time length when the temperature at the central portion of the steel material reaches the instructed temperature .

PATENT LITERATURE

    PATENT LITERATURE 1: JP-A-2008-031530
    PATENT LITERATURE 2: JP-A-2006-342368
    PATENT LITERATURE 3: JP-A-10-080746

SUMMARY OF THE INVENTION

As the above, it is important for quenching a steel material to calculate an appropriate cooling time length required for cooling the material to reach an instructed temperature under a preset cooling condition.

However, the steel materials to be quenched have various sizes and shapes. Since the size and shape of the steel materials to be quenched are different, cooling rates at the central portions of the steel materials differs. Since the cooling rates at the central portions of the steel materials are different for individual steel materials having different sizes and shapes, it is difficult to grasp a relationship between the temperature at the central portion of the steel material during cooling and the cooling time length. Thus, it is not easy to calculate an appropriate cooling time length required for cooling the material to reach the instructed temperature.

An object of the present invention is to provide a method for deriving a cooling time length for quenching a steel material to efficiently control the cooling to an instructed temperature with use of the cooling time length even when the steel materials to be quenched have different sizes and shapes.

Another object of the present invention is to provide a method of quenching the steel material using the cooling time length derived by the above method.

Still another object of the present invention is to provide a method of quenching and tempering a steel material, including tempering the steel material quenched by the above quenching method.

According to the present invention, provided is a method for deriving a cooling time length in advance of quenching of a steel material. Here, the cooling time length is defined from a start of cooling of the steel material heated at a cooling start temperature Ts under a cooling condition C until the cooling is stopped. The method included following steps:

- a first step of producing n pieces of specimens (where n is a natural number of two or more) made of a same steel type A as the steel material to be quenched and having different volumes V and different surface areas S with each other, and then making a hole at each of the specimens for inserting a temperature sensor at a central portion of the specimen;
- a second step of inserting the temperature sensor in the hole of each specimen, and subjecting each of the n specimens to a test, wherein the test includes;

    heating the specimen and maintain at a cooling start temperature Ts;
    starting cooling of the specimen under the same cooling condition C; and
    measuring a cooling time length "t" from the start of the cooling until the temperature at the central portion of the specimen measured by the temperature sensor reaches a cooling stop temperature Te;

- a third step of determining a function "f" satisfying Relational Expression (1) from n sets of data obtained in the second step, each set of data including the volume V, the surface area S and the cooling time length "t"; and
- a fourth step of substituting a volume V and a surface area $S_1$ of a shape $F_1$ of the steel material to be quenched in the Relational Expression (1) to calculate a cooling time length $t_1$.

$$\text{Relational expression (1): } t = f\,(V/S)$$

There is also provided a method for quenching a steel material using the cooling time length $t_1$ derived by the above method for deriving a cooling time. When quenching the steel material, the steel material heated at the cooling start temperature Ts is cooled for the cooling time length $t_1$ under the cooling condition C and then the cooling under the cooling condition C is stopped. The cooling preferably includes multiple stages having different cooling conditions with each other, and a function "f" for each stage is determined for deriving each cooling time length of each cooling stage.

Furthermore, the present invention provides a method for quenching and tempering a steel material, including tempering the steel material quenched by the above quenching method.

According to the present invention, it is possible to easily calculate an appropriate cooling time length for quenching even though the steel materials to be quenched have various sizes and shapes. Therefore, when quenching of a small number of materials made of various steel types or steel materials having various shapes is required, it is possible to appropriately quench each steel material.

BRIEF DESCRIPTION OF DRAWINGS

Fig. 1 illustrates a relationship between a V/S value and a cooling time length "t" when a specimen made of SKD 61 was cooled from a quenching temperature of 1020°C until a temperature at a central portion of the specimen reaches 650°C under a cooling condition using blast cooling by large fans (with three fans each having capacity of 420 $m^3$/minute) in an atmosphere.
Fig. 2 illustrates a modified relationship between the V/S value and the cooling time length "t", to which the relationship of Fig. 1 is corrected to match an actual quenching on an steel material.
Fig. 3 illustrates a relationship between the V/S value and the cooling time "t" when the specimen having been cooled to 600°C at a central portion of the specimen in Fig. 1 is further cooled until the temperature at the central portion of the specimen reaches 250°C under cooling conditions using oil quenching of immersing the whole specimen in oil at 100°C.
Fig. 4 illustrates a modified relationship between the V/S value and the cooling time length "t", to which the relationship of Fig. 3 is corrected to match an actual quenching on an steel material..
Fig. 5 schematically depicts a shape of a fixed insert of a die-casting mold. It is a schematic view illustrating an exemplary shape of an actual steel material.
Fig. 6 depicts a rectangular parallelepiped having substantially the same volume as the steel material of Fig. 5.
Fig. 7 illustrates an exemplary quenching pattern (one-stage cooling) performed on an actual steel material.
Fig. 8 illustrates another exemplary quenching pattern (two-stage cooling) performed on an actual steel material.

DESCRIPTION OF EMBODIMENTS

First feature of the present invention is that various sizes and shapes of a steel material to be quenched are sorted out by a "V/S value" defined by a ratio of a volume V to a surface area S of the steel material. Further feature of the present invention is that a cooling time length until the steel material is cooled to reach an instructed temperature is calculated by utilizing a correlation between the V/S value and a cooling rate at a central portion of the steel material. Further feature of the present invention is that the cooling time length is beforehand calculation using specimens made of the same steel type as the steel material to be quenched in practice so that the cooling time length can be generally and easily calculated for quenching of steel materials having various sizes and shapes. Thus, a first embodiment of the present invention is to provide a method of beforehand deriving a cooling time length for "actually" quenching a steel material (hereinafter, simply referred to as a "cooling time length deriving method"), where the cooling time length is defined from a start of cooling, under a cooling condition C, of a steel material heated at a cooling start temperature $T_s$ until the cooling under the cooling condition C is completed. Hereinafter, components for the cooling time length deriving method according to the present invention will be described.

(A) The cooling time length deriving method according to the present invention includes a first step of preparing n pieces of specimens (where n is a natural number of two or more) made of a same steel A as the steel material to be quenched and having different volumes V and different surface areas S with each other, and then making a hole at each of the specimens for inserting a temperature sensor at a central portion of the specimen.

In the present invention, before actually quenching a steel material, specimens made of a same steel type A as this steel material are prepared. Then, the specimens are quenched under the same cooling condition C as that for actual quenching of the steel material as described later, and a cooling time length is calculate beforehand, that is necessary for a central portion of the steel material to reach an instructed temperature during the actual quenching of the actual steel material.

At this time, there is a correlation between a V/S value defined by a ratio of a volume V of the steel material to a surface area S thereof and a cooling rate at the central portion of the steel material that is being cooled. As the volume of the steel material is larger, the central portion of the steel material is less easily cooled. On the other hand, as the surface area of the steel material is larger, the steel material is easily cooled. Thus, the two factors of the volume and the surface area of the steel material act directly and inversely to the cooling of the central portion of the steel material. Accordingly, by utilizing the correlation of the V/S value including the two factors of the inverse relationship, it is possible to easily and accurately calculate the cooling time length. When the steel material is actually quenched, it is possible to calculate beforehand the cooling time length necessary for the quenching cooling (that is, a time length until the cooling in a cooling condition is stopped) using the V/S value of the steel material to be quenched utilizing the above-described correlation. It is noted that the central portion of the steel material indicate a center of gravity of the steel material, or a portion of the steel material that is cooled slowest, for example.

Therefore, the prepared specimens are those sorted out by the V/S value. In order to obtain the correlation, at least two specimens (n specimens where n is a natural number of two or more) processed into various shapes are prepared so as to have different V/S values. At this time, the n specimens preferably have such V/S values that the V/S value of the steel material to be actually quenched falls in a range between the minimum V/S value and the maximum V/S value of these specimens. The specimens are not necessary to have the same sizes (volumes) or same shapes with each other. As long as the specimens have a same V/S value, cooling rates at the central portions of the specimens are substantially same under a same cooling condition even though they may have different sizes and shapes. However, if the shapes of the specimens are remarkably different, for example, in a case where one is of a flat shape and the other is of an irregular form, an error might occur in the calculated values of the volume V and the surface area S, and complicated operation is necessary to achieve accuracy of correlation for the actual quenching of the steel material. In this respect, the shapes of the specimens preferably have substantially similar figures. Further preferable, the shapes are e.g. cube, a rectangular parallelepiped, a prismatic column, or a cylinder, since such shapes facilitate calculation of the volume V and the surface area S. Further more preferably, the shape is a cubic since the specimens of substantially similar shapes are easily produced. It is efficient to use the correlation obtained with these specimens as a basis and then correct the correlation, as necessary, to have more accuracy with reference of the actual quenching of the steel material. Details of the correction will be described later.

In each specimen, a hole is formed at a central portion thereof so that a temperature sensor is inserted in the hole for measuring a temperature of the portion during quenching. It is possible to form another hole for inserting the temperature sensor at a position other than the central portion of the specimen. For example, the position may be at a middle position between a surface of the specimen and the central portion, or a position more close to the surface of the specimen than the middle position by a half distance. This makes it possible to compare the temperatures measured at individual positions of the specimen, leading to an enhanced reliability of the measured temperature.

Strictly, the presence of the hole for inserting the temperature sensor changes the volume V and the surface area S of the specimen. However, the change in the volume V and the surface area S due to the presence of the hole have little effect on the above correlation and is negligible.

In order to utilize the correlation between the V/S value and the cooling rate at the central portion of the specimen obtained by the quenching test for contrilling the actual quenching of the steel material, the specimen should made of a steel type A that has the same composition as the actually quenched steel material. Please note that it is sufficient to define the steel used in the present invention as a same steel material that is to be quenched. Therefore, there is not necessary to specify the composition of the steel material to achieve the effect of the present invention. However, in view of the fact that the method according to the present invention is applied to production of various tools, molds, structural components, or the like, the above steel A may be "alloy tool steel" defined in JIS-G-4404, for example. For example, a cold tool steel such as SKD 11 and a hot tool steel such as SKD 61 are representative steels. It is also possible to use a tool steel with modified composition, for example by changing any elemental contents or adding other elements in the composition.

The steel material to be quenched may have a composition, for example, including C: 0.30% to 2.40% and Cr: 3.00% to 15.00% by mass%. A hot work tool steel may include C: 0.30% to 0.60% and Cr: 3.00% to 6.00%, and a cold work tool steel may include C: 0.60% to 2.40% and Cr: 5.00% to 15.00%. Furthermore, both the cold work tool steel and the hot work steel may further include one or more elements selected from Si: up to 2.00%, Mn: up to 1.50%, P: up to 0.050%, S: up to 0.050%, one or both of Mo and W in a relational expression $(Mo+1/2W)$: 0.50% to 4.00%, V: 0.10% to 1.50%, Ni: 0% to 1.00%, Co: 0% to 1.00%, and Nb: 0% to 1.50%. The balance of the steel may be Fe and impurities.

Cu, Al, Ti, Ca, Mg, oxygen (O) and nitrogen (N) are elements that is added in some cases or remain in the steel material as impurities. Upper limits of the content of these elements may be preferably : 0.25% for Cu, 0.25% for Al, 0.03% for Ti, 0.01% for Ca, 0.01% for Mg, 0.01% for O, and 0.08% for N.

(B) The cooling time length deriving method according to the present invention includes a second step of inserting the temperature sensor in the hole of each specimen, and subjecting each of the n specimens to a test, wherein the test comprises: (a) heating the specimen and maintain at a cooling start temperature Ts; (b) starting cooling of the specimen under the same cooling condition C; and (c) measuring a cooling time length "t" from the start of the cooling until the temperature at the central portion of the specimen measured by the temperature sensor reaches a cooling stop temperature Te.

In the second step, the "n" specimens produced in the first step are quenched, thereby data are obtained that are used for determine a correlation between the V/S value and the cooling rate at the central portion of steel material (that is, cooling time length for quenching cooling) in third step as described later. The correlation can be utilized to manage a process of quenching of an actual steel material.

The second step also employs the cooling condition C which is same as that for quenching the actual steel material. In achieving the effect of the present invention, controlled factors of the cooling condition includes a kind of cooling medium, a temperature or a the pressure (strength).

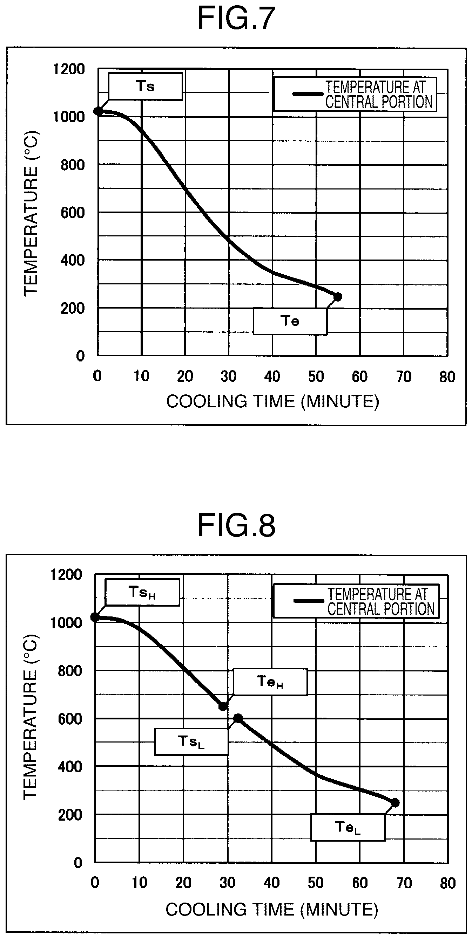

First, a temperature sensor is inserted into a hole formed in the central portion of the specimen. Then, the specimen with the inserted temperature sensor is heated and maintained at a cooling start temperature Ts. Please note that the cooling start temperature Ts is determined to be, for example, a quenching temperature in quenching the actual steel material (see Fig. 7). Specifically, it is in a range of 1000°C to 1100°C, for example.

The specimen heated and maintained at the cooling start temperature Ts is cooled under the cooling condition C. During the cooling, a temperature at the central portion of the specimen is measured with the temperature sensor, and the specimen is cooled until the temperature at the central portion reaches a cooling stop temperature Te. Here, the cooling stop temperature Te is, for example, a quenching finishing temperature of the actual quenching (see Fig. 7). Specifically, it is in a range of from a room temperature to 350°C, for example.

At this time, a cooling time length "t" from the start of the cooling until the temperature at the central portion reaches the cooling stop temperature Te is measured. The cooling time length "t" is measured for the "n" specimens having various V/S values to collect "n" cooling time lengths "t" for the different V/S values.

As the cooling start temperature Ts and the cooling stop temperature Te, various temperatures can be set other than the above quenching temperature and the quenching finishing temperature. For example, a temperature range between the quenching temperature and the quenching finishing temperature may be employed. In this case, the cooling time length deriving method according to the present invention is applied to the cooling temperature range. Furthermore, another cooling temperature range between the quenching temperature and the quenching finishing temperature may be set as the "cooling start temperature Ts" and the "cooling stop temperature Te" to apply the cooling time length deriving method according to the present invention.

In this manner, multiple cooling ranges (cooling start temperature Ts and cooling stop temperature Te) may be set between the quenching temperature and the quenching finishing temperature and the cooling time length deriving methods according to the present invention is applied to each range, such as referred to "multi-stage quenching". Multi-stage quenching means that quenching cooling includes multiple cooling stages under different cooling conditions. In the multi-stage quenching, for example, first cooling is started under a first cooling condition, and then the first cooling is stopped and a second cooling starts under second cooling condition different from the first condition. In the case, cooling time length is derived in each stage (under each cooling condition), by determine each function "f" for each cooling stage.

As an example of the multi-stage quenching, the steel material is a tool product such as a mold. In the case, quenching of the material includes two cooling stages (two cooling conditions) to suppress generation of strain during the quenching (see Fig. 8). Specifically, a first stage cooling in a high temperature range is conducted by blast or gas cooling, while a second-stage cooling in a low temperature range employs gas cooling with a higher gas pressure than that in the first stage, or by oil cooling.

As illustrated in Fig.8, the second step according to the present invention includes a step of measuring a cooling time length "$t_H$" in the first stage, for which a temperature of the central portion of the specimen is cooled from a cooling start temperature "$Ts_H$" to a cooling stop temperature "$Te_H$" and a step of measuring a cooling time length "$t_L$" in the second stage, for which the temperature is cooled from a cooling start temperature "$Ts_L$" to a cooling stop temperature "$Te_L$", as necessary.

In Fig. 8, the cooling stop temperature "$Te_H$" in the first stage is 450°C to 700°C, for example. If a cooling facility allows continuous cooling between the first-stage cooling and the second-stage cooling, the cooling start temperature "$Ts_L$" of the second stage is identical to the cooling stop temperature "$Te_H$". However, if the cooling facility can not allow to operate such continuous cooling and steel material should be transferred for example, the temperature of the steel material will be decrease considerably during the transfer. Thus, the cooling start temperature "$Ts_L$" is considerably lower than the cooling stop temperature "$Te_H$". For example, the cooling start temperature "$Ts_L$" may be decreased by about 50°C. In this manner, it is preferable to note an actual temperature behavior at the central portion of the steel material during the actual quenching to set the cooling start temperature "T"s and the cooling stop temperature "Te" in the second step.

(C) The cooling time length deriving method according to the present invention includes a third step of determining a function "f" satisfying Relational Expression 1: t = f (V/S), from the n sets of data obtained in the second step, each set of data including the volume V, the surface area S and the cooling time length t.

In the third step, a correlation between the V/S value of the steel material used for quenching the actual steel material and the cooling time length required for quench cooling from the "n" cooling time lengths "t" with respect to different V/S values obtained in the second step. The correlation is determined by a function "f (V/S)" defined by Relational expression (1): t = f (V/S).

An exemplary procedure for determining the function "f (V/S)" will be described.

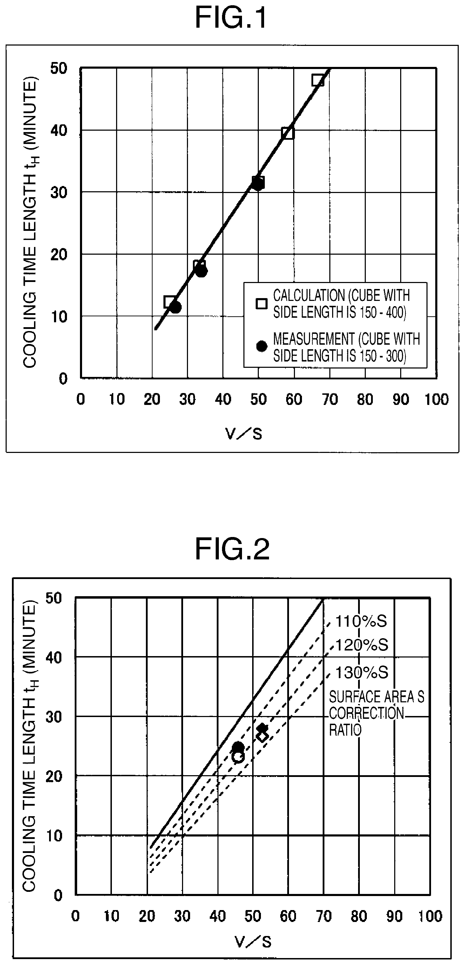

First, the "n" V/S values and the cooling time lengths "t" obtained in the second step are plotted in a graph. Fig. 1 depicts a relationship between the V/S values and the cooling time lengths "t" when a specimen made of SKD 61, as a steel type A, was cooled from a quenching temperature of 1020°C until a temperature at a central portion of the steel material reaches 650°C under a cooling condition C using blast cooling by large fans (three fans, each fan has a capacity of 420 $m^3$/minute) in an atmosphere. Filled circles "●" in Fig. 1 represent measured "n" data obtained in the second step. The specimen is of a cubic shape. A number "n" of specimens is three, having the V/S values being 25.00 (side length of the cube is 150 mm), 33.33 (side length of the cube is 200 mm) and 50.00 (side length of the cube is 300 mm). Then, a relational expression "t = f (V/S)" between the V/S value and the cooling time length "t" indicated by the filled circles is determined.

As a method for determining the relational expression "t = f (V/S)" from the data of the filled circles in Fig. 1, a fitting function of commercially available spreadsheet software can be used. Fitting means to find a function (straight line or curve) that best matches to experimentally obtained data (constraint conditions). For example, regression analysis is known. The function obtained by the fitting is an approximate straight line or approximate curve line and does not pass all data points. The function "f" representing the relationship between the V/S value and the cooling time length "t" according to the present invention can be obtained by fitting, for example, by "linear function" or "quadratic function" of the V/S value. It was confirmed by a result of the quenching test described above and temperature analysis by CAE described later. In Fig. 1, the function "f" is fitted with a linear function of (V/S).

By the fitting, the relationship between the V/S value and the cooling time length "t" can be expressed as a line in the graph, that is, it can be visualized. It is advantageous for easily recognize errors between the data. For example, even when a quenching test is performed with same specimens under same cooling conditions, a small error may occur between measured values between different quenching facilities. In the case, the error (due to difference between the cooling capacities unique to individual quenching facilities) may be easily recognized.

In order to improve accuracy of the fitting, it is effective to obtain more actually measured values of the "n" cooling time lengths "t" with respect to different "V/S values in the second step. Alternatively, it is also effective to use e.g. the computer aided engineering (CAE) for expand the actually measured "n" data in the second step to the "cooling time lengths "t" for a larger number of different "V/S values". By expanding the "n" sets of data to a case of specimens with greater "V/S values" or by expanding the V/S value of the actually quenched specimen to a V/S value between the minimum V/S value and the maximum V/S value of the specimens, it is possible to apply the function "f; t = f (V/S)" determined in the third step to a larger steel material in actual quenching of the steel material.

When CAE is used to increase the data, the process to determine a heat transfer coefficient between the specimen being cooled and a cooling medium from the measured value obtained in the second step is important. By applying the heat transfer coefficient to specimens having unmeasured V/S values, it is possible to calculate the cooling time lengths with respect to various V/S values. The open square marks "□" in Fig. 1 represent additional data for the V/S values of 58.33 (side length of the cube is 350 mm) and 66.67 (side length of the cube is 400 mm) calculated by CAE using the three sets of measured value data represented by the filled circles "●" obtained in the second step. At this time, the actually measured data represented by the filled circles "●" may be checked whether they were correctly measured by calculating with use of the heat transfer coefficient. In Fig. 1, open square marks "□" obtained by the calculation at three positions 25.00, 33.33, and 50.00 of V/S value are substantially overlapped with the filled circular marks "●" indicating actually measured values. Thus, it is confirmed that the actual measurement was correct. Then, further data calculated by the CAE may be added to perform fitting with the function. A solid line in Fig. 1 indicates a function "f" obtained by the fitting of the points including the added data by the CAE. It can be seen in Fig. 1 that the added data fit the straight line indicating a linear functional relationship between the V/S values and the cooling time lengths "t".

In practice, the actual steel material processed in a shape of various jigs, tools, molds, structural components, etc. has an irregular surface. Therefore, it is effective to correct the function "f" determined with use of the cubic specimens, for example, to suitable one for the quenching of the steel material worked in an actual shape.

Since the steel material processed into the actual shape has an irregular surface, like a tool product such as a mold, a surface area of the actual steel material increases and thus it makes higher temperature decrease rate during quench cooling than that of a cube having the same V/S value. Thus, the temperature of the central portion reaches the cooling stop temperature Te sooner from the cooling start temperature Ts in the actually-shaped steel material than the cubic specimen. If the cooling time length obtained from the function "f" in Fig. 1 determined by the cubic specimens is applied, without correction, to the quenching of the actual steel material, the actual temperature at the central portion at the cooling time "t" from the star of the quenching may be lower than the estimated cooling stop temperature Te in some cases. Excessively decreased temperature at the central portion of the steel material in the actual quenching may lead to cracking or distortion of the material. In the case of the two-stage cooling, the delay of switching of stages also causes cracking or distortion of the steel material or deterioration of mechanical properties.

Thus, the specimens used in the first to third steps may have a non-cubic shape. In order to improve accuracy of the function "f", the specimens may have a shape simulated with that of the actually quenched steel material. The specimens having such a shape may be used in addition to the cubic specimens.

In order to improve the accuracy of the function "f' in Fig. 1 so as to adjust it to the actual quenching behavior, correction may be made to shift the function "f" in Fig. 1 toward "shorter time side" on the basis of the quenching test results of changing the shape of the specimen. That is, correction of a surface area S of the specimen to a greater surface area S' in determining the function "f" in the third step. More specifically, with respect to the straight line of the function "f" in Fig. 1 in the relationship between the V/S values and the cooling time lengths "t", the correction is made by substituting the value of the surface area S of the V/S with a greater surface area S' so that the function "f" is shifted based on the new V/S' values toward right by an appropriate amount (see Fig. 2). The amount of shift is limited as

$$S < S' \leq (1.3 \times S).$$

It is confirmed that the quenching behavior of the actual steel material approximately falls within the range by the quenching test and the temperature analysis by CAE or the like.

The corrected function "f" preferably uses the replaced value of (1.3 × S). In an actual quenching, it is preferably considered to prevent overcooling, by which the material is cooled lower than the target cooling stopping temperature. When the function "f" obtained with the corrected (1.3 × S) is used, the cooling time length is estimated to reach the target cooling stop temperature in a shorter time period than the actual cooling time length. Thus, excessive cooling can be prevented even when the cooling time length has been extended.

(D) The cooling time length deriving method according to the present invention includes a fourth step of substituting a volume $V_1$ and a surface area $S_1$ of a shape $F_1$ of the steel material to be quenched in the Relational Expression (1) to calculate a cooling time length "$t_1$".

In the fourth step, a cooling time length "$t_1$" is calcu-

lated by applying the function "f' determined in the first to third steps to a quenching of an actual steel material having a volume $V_1$ and a surface area $S_1$, where cooling time length "$t_1$" is a time period from the cooling start temperature "Ts" to the cooling stop temperature "Te". As a result, it is possible to manage the cooling for quenching the actual steel material until an instructed temperature with use of the cooling time length.

The cooling time length may include a slight operating range (error range) with respect to that calculated by the Relational Expression (1). For example, the cooling time length may have a width range of plus or minus 20% of the calculated one. The allowable width range is preferably within plus or minus 10%. In consideration of preventing overcooling, the upper limit of the range of the cooling time length is preferably 10%, more preferably 5%.

In consideration of easy management of the cooling time length for actual quenching, the cooling time length calculated by the Relational Expression (1) may be rounded to an integer numerical value by rounding up/down, rounding off, etc. at the first decimal place.

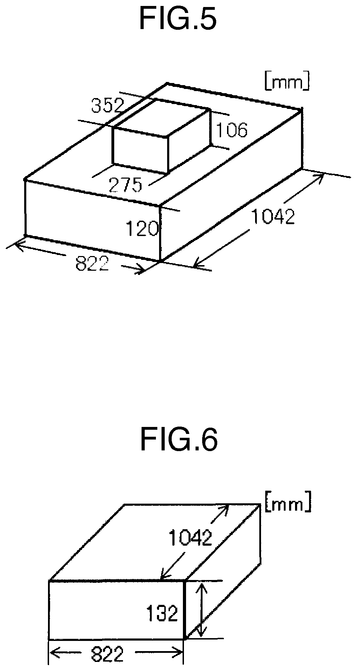

Here, a method of simply obtaining a volume $V_1$ and a surface area $S_1$ of an actual steel material will be exemplified. Fig. 5 schematically depicts a shape of a fixed insert of a die-casting mold, that is an exemplary shape $F_1$ of the actual steel material. First, the actual volume $V_1$ can be easily obtained from a mass of the material and its specific gravity (for example, a steel has the specific gravity of approximately 7.8). The fixed insert illustrated schematically in Fig. 5 for the sake of convenience has the volume $V_1$ of 113,043,680 mm$^3$.

Next, a three-dimensional approximate shape having the same volume as the volume $V_1$ of the actual steel material is assumed. At this time, it is preferable that the approximate shape has a surface area which is easily obtained, such as a cube or rectangular parallelepiped. In the case of the fixed insert illustrated in Fig. 5, for example, only a height is changed, while fixing a width and a length (that is, the vertical and horizontal dimensions of a bottom surface), until an "approximate height" at which the shape has substantially the same volume as the volume $V_1$ of the fixed insert in Fig. 5. Fig. 6 depicts a rectangular parallelepiped having the assumed approximate height. A surface area calculated from the rectangular parallelepiped in Fig. 6 can be assumed to be identical to a surface area $S_1$ of the fixed insert in Fig. 5. The fixed insert in Fig. 5, which shape is schematically illustrated for the sake of convenience, has a surface area $S_1$ of 2,205,144 mm$^2$.

Some actual steel materials include an inside minute space such as a water cooling hole or a screw hole. Strictly speaking, the space influences a volume $V_1$ and a surface area $S_1$ of the actual steel material.

However, it is confirmed that the influence on the volume $V_1$ and the surface area $S_1$ is little for the present invention and it is negligible.

In addition, although the surface area S in the function "f" is corrected in the third step, the surface area $S_1$ of the "$V_1/S_1$ value" of the actual steel material can be corrected within a range of $S_1 < S_1' \leq (1.3 \times S_1)$, instead of the correction of the surface area S. Preferably, a target cooling rate R for generating martensitic transformation in the quenched structure and the cooling time length "$t_1$" calculated in the fourth step satisfy the following Relational expression (2). Unless the Relational expression (2) is satisfied, the cooling condition C is changed to a cooling condition C' different from the cooling condition C and the second and the subsequent steps are conducted again. Alternatively, the steel type A is changed to another steel type A' different from the steel type A, and the first and subsequent steps are conducted again.

$$\text{Relational expression (2): } (Ts - Te) / t_1 \geq R$$

In the fourth step, it is also possible to confirm beforehand whether the function "f" determined in the first to third steps is applicable to actual quenching. In the quenching of the actual steel material having the shape $F_1$ with a ratio of the volume to the surface area of $V_1/S_1$, it can be confirmed whether a central portion of the steel material can be cooled at a cooling rate equal to or higher than the target cooling rate R, that is described below, when the cooling time length $t_1$ obtained from the function "f" is applied to the cooling from the cooling start temperature Ts to the target cooling stop temperature Te at the central portion of the steel material. If the cooling rate at the central portion of the steel material is below the target cooling rate R, the martensitic transformation will be insufficient at the central portion in some cases.

The target cooling rate R will be described.

In the method of quenching a steel material according to the present invention, it is preferable that the actual cooling rate at the central portion of the steel material is high enough to generate martensitic transformation when a steel material of steel type A is quenched under a predetermined cooling condition C. In order to judge that the actual cooling rate is sufficiently high, it is preferable to predetermine the target cooling rate R, as a determination criterion on whether the structure for the steel material of the steel type A martensitic-transforms. Thus, it is preferable that the actual cooling rate is not lower than the target cooling rate R.

The target cooling rate R can be determined with reference to a critical cooling rate, for example. The critical cooling rate is a minimum cooling rate necessary to generate the martensitic transformation. The target cooling rate R can be set to an "upper critical cooling rate" which is a minimum cooling rate at which the quenched structure includes only martensite phase. Furthermore, the target cooling rate R can be set to be higher (more rapid) than the upper critical cooling rate, for example, a cooling rate higher by up to 30% than the upper critical cooling rate (for example, a cooling rate 10% or 30% higher than the upper critical cooling rate).

If the cooling may be lowered due to a large size of the steel material or other reasons, the target cooling rate R can be set to a smaller (less rapid) rate to a certain degree than the upper critical cooling rate. For example, the target cooling rate R can be set to be slower than the upper critical cooling rate by up to 30% than the upper critical cooling rate (for example, a cooling rate 10% or 30% lower than the upper critical cooling rate).

As a concrete value, the target cooling rate R is, for example, approximately 9.0 to 15.0°C/minute (for example, 10.0°C/minute or 13.0°C/minute) in a higher temperature range cooling process from the quenching temperature to 450 - 700°C. The cooling rate in a lower temperature range is approximately 7.0 to 12.0°C/minute from the temperature of 450 - 700°C to a temperature of a room temperature to 350°C.

Then, the cooling time length "$t_1$" from the cooling start temperature Ts to the cooling stop temperature Te is obtained by substituting the values of the volume $V_1$ and the surface area $S_1$ of the actual steel material in the Relational expression (1). Then, when the obtained cooling time length "$t_1$" is substituted in the relational expression "(Ts - Te)/t", the cooling rate from the cooling start temperature Ts to the cooling stop temperature Te is obtained. When this value is equal to or higher than the above target cooling rate R (when the above Relational expression (2) is satisfied), the cooling rate is effective for sufficiently generate the martensitic transformation of the structure in the actual quenching.

In contrast, if the cooling rate obtained by the relational expression is below the target cooling rate R (that is, the Relational expression (2) is not satisfied), the cooling rate may be insufficient for generating the martensitic transformation. In the case, before the actual quenching is performed, it is preferable to reconsider the initially determined cooling condition C and change it to a cooling condition C' in which the value of (Ts - Te) / $t_1$ is equal to or higher than the target cooling rate R. Alternatively, it may be preferable to reconsider the steel type and to change the steel type A to a steel type A' having a composition more excellent in hardenability, for example. After the determination of the cooling rate C' or the steel type A', the first and subsequent steps, or the second and the subsequent steps, may be conducted again. Conventionally, a target cooling rate for martensitic-transforming a structure in quenching a steel material is often known empirically. In addition, when the cooling time length "$t_1$" is obtained in the above fourth step, it can be usually empirically determined whether the cooling time length "$t_1$" is sufficient for the martensitic transformation. However, when quenching an actual steel material, it is effective to confirm whether a cooling rate equal to or higher than the target cooling rate can be produced under a preset cooling condition for individual steel materials having mutually different sizes and shapes. In other words, it is effective to estimate whether the cooling condition C can achieve a cooling rate equal to or higher than the target cooling rate R at the central portion of the steel material.

According to the present invention, even when the sizes and shapes of the steel materials are different, the cooling rate at the central portion of the steel material can be easily estimated. Preferably, it is possible to estimate that the cooling rate at the central portion of the steel material can achieve the cooling rate equal to or higher than the target cooling rate R.

In the present invention, it is more preferable to set a "target cooling rate R' " for suppressing cracking of the steel material at the time of quenching in addition to setting the "target cooling rate R" for generating the martensitic transformation. Then, it is effective for suppressing the cracking by setting the "actual cooling rate" at the central portion of the steel material be equal to or lower than the target cooling rate R' (that is, by satisfying (Ts - Te) / $t_1 \leq$ R') at the time of quenching the actual steel material. The target cooling rate R' is set in a temperature range in which the temperature of the central portion of the steel material is not higher than 600°C.

As a concrete value of the target cooling rate R', for example, it is approximately 7.5 to 17.0°C/minute (for example, 13.0°C/minute or 15.0°C/minute) in the cooling process in the low temperature range from 600°C to a temperature of a room temperature to 350°C. Further preferably, the target cooling rate R' is set when the two-stage cooling is employed (see Fig. 8). Particularly preferably, the target cooling rate R' is set in the second-stage cooling.

(E) In a second embodiment of the present invention, a method for quenching a steel material is provided. The steel material heated at the cooling start temperature Ts is cooled for the cooling time length "$t_1$" under the cooling condition C and then the cooling under the cooling condition C is stopped.

When the cooling time length "$t_1$" is calculated in the fourth step, which is a time period where the central portion of the steel material is cooled from the cooling start temperature Ts to the cooling stop temperature Te, and preferably when the function "f" obtained in the fourth step is applicable to the quenching management of the actual steel material, the actual steel material may be quenched for the cooling time length "$t_1$". Specifically, the steel material made of the steel type A and processed in the predetermined shape $F_1$ is heated at the quenching temperature Ts, and then cooled for the cooling time length "$t_1$" under the cooling condition C, and then the cooling under the condition C is stopped. If the quenching is of a two-stage cooling or the like, the cooling under the cooling condition C corresponds to the first-stage cooling is performed, and after the first-stage cooling is stopped, the second-stage cooling under another cooling condition , different from the previous cooling condition C, may be applied.

In a third embodiment according to the present invention, the above steel material quenched by the quenching method is further tempered. Thereby, the steel material having mechanical properties such as hardness and toughness is produced.

Examples

As an example, a fixed insert having a shape $F_1$ in Fig. 5 was selected as a steel material to be quenched. Then, the fixed insert is subjected to multi-stage quenching with two-stage cooling illustrated in Fig. 8.

The two-stage cooling has following quenching pattern. A first-stage cooling is made from the quenching temperature ($Ts_H$) of 1020°C until the central portion of the fixed insert reaches 650°C ($Te_H$). The steel material after the first-stage cooling was transferred to another cooling facility for a second-stage cooling. During the transfer, the temperature of the central portion was lowered to 600°C. ($Ts_L$). The second-stage cooling was from the temperature decrease lowered to 600°C until the temperature reaches the quenching ending temperature ($Te_L$) of 250°C.

The fixed insert was produced from SKD 61 as the steel type A. As a preferable condition that promotes sufficient martensitic transformation in the metallic structure of the fixed insert after quenching, the target cooling rate R is set to 13.5°C/minute for the first-stage cooling and 7.5°C/ minute for the second-stage cooling. In the example, the "target cooling rate R' " was considered since it is preferable for suppressing cracking during quenching. The target cooling rate R' was set to 13.0°C/ minute in the second-stage cooling. In other words, the cooling rate for the second stage was set in a range of 7.5 to 13.0°C/ minute, thereby sufficient martensitic transformation is generated in the structure of the fixed insert after quenching as well as cracking was suppressed in the fixed insert.

As the cooling condition C, blast cooling with large fans in an atmosphere (three fans, each having capacity of 420 m$^3$/minute) was employed in the first-stage of cooling. Then, in the second stage of cooling, oil quenching of immersing the entire fixed insert in oil at 100°C was conducted.

<First Step>

Three specimens made of SKD 61 as the steel type A were produced. The three specimens had a shape of a cube having a side length of respectively 150 mm (volume V/surface area S was 25.00), 200 mm (V/S was 33.33) and 300 mm (V/S was 50.00). Subsequently, a hole in which the temperature sensor is to be inserted was made at the central portion of each of the specimens.

<Second Step>

Next, a multi-stage quenching test with two-stage cooling according to the above quenching pattern and under the cooling condition C simulating the quenching on an actual fixed insert was conducted for the three specimens. At the time, a temperature sensor was inserted in the hole of each specimen to measure the cooling time length $t_H$ from the temperature $Ts_H$ to the temperature $Te_H$ at the central portion of the specimen and measure the cooling time length $t_L$ from the temperature $Ts_L$ to the temperature TeL.

<Third Step>

Measured values of the three sets of "V/S value" and "cooling time length $t_H$" obtained in the second step were plotted on a graph (the suffix "H" indicates the first-stage cooling). Fig. 1 shows plots of the measured values for the first-stage cooling in the high temperature range (marked with filled circles "●"). The CAE based procedure was made to obtain a heat transfer coefficient between the specimen and the cooling medium from the relationship of the measured values and calculated the cooling time lengths $t_H$ at various V/S values based on the calculated heat transfer coefficient. Thereby, additional data in a further expanded V/S value range was obtained. As additional data, relationships of the V/S value and the cooling time length "t" at the V/S value of 58.33 (side length of the cube is 350 mm) and 66.67 (side length of the cube is 400 mm) are plotted on the graph of Fig. 1 (marked with open squares "□"). At this time, the similar CAE calculation was executed to reexamine the relationship of the three sets of measured values, and results are plotted again on the graph of Fig. 1 (marked with open squares "□"). Subsequently, plotted points with a plurality of marks open squares "□" added using the CAE were fitted to obtain a function $f_H$ indicated by a "solid line" in Fig. 1. At this time, the fitting application of spreadsheet software "Excel (2007)" manufactured by Microsoft Corporation was applied.

Then, assuming that the steel material to be actually quenched is a fixed insert having a protrusion illustrated in Fig. 5, the above function $f_H$ obtained with the cubic specimen is corrected to enhance accuracy of the function f$_H$. That is, the value of "surface area S" in the function f$_H$ is replaced with the value of "S'" that satisfies "S<S'≤(1.3 × S)" to shift the function f$_H$ to the right side. The broken lines in Fig. 2 indicate the corrected functions f$_H$ obtained by shifting the function f$_H$ in Fig. 1 to the right side with the relationships of S' = (1.1 × S), S' = (1.2 × S), and S' = (1.3 × S), respectively. In addition, the plotted points marked with filled circles "●" and filled rhombuses "♦" illustrated in Fig. 2 are measured values indicating the relationships of the "V/S value" and "cooling time length t$_H$" at the time of the quenching test with the shape of the specimen being changed to the protruding shape like the fixed insert illustrated in Fig. 5. The plotted points indicated by open circles "o" and open rhombuses "◊" illustrated in Fig. 2 are calculated and checked results using the CAE calculation on the measured values marked with filled circles "●" and filled rhombuses "♦". It is recognizable that these results are in good agreement with the relationship of the function f$_H$ corrected within the range of "S<S'≤(1.3 × S)" with high accuracy.

In the present example, the function f$_H$ with an amount of correction being "S' = (1.3 × S)" was adopted in consideration of prevention of overcooling. Additionally, it was confirmed that the corrected function f$_H$ is a linear function of "t$_H$ = 0.6572 (V/S) - 9.9774" (the unit of t$_H$ is "minute", the unit of V is "mm$^3$", and the unit of S is "mm$^2$").

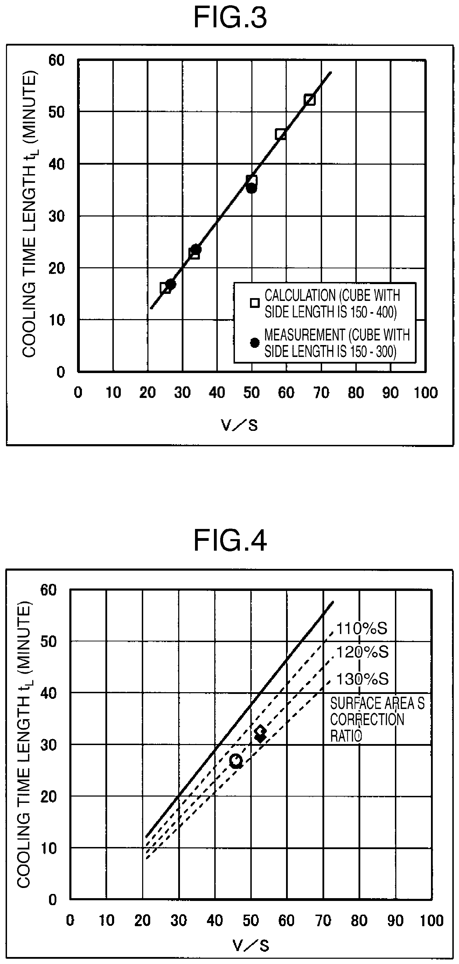

In this third step, similar operation was applied to the second-stage cooling in a low temperature range. The filled circles "●" in Fig. 3 are a plot of the measured values for the second-stage cooling (the suffix "L" indicates the second-stage cooling). The open squares "□" indicate additional data obtained by processing the measured value using CAE calculation. In addition, the "solid line" in Fig. 3 corresponds to a function f$_L$ obtained by fitting the plotted points marked with open squares "□". At this time, the fitting application of spreadsheet software "Excel (2007)" manufactured by Microsoft Corporation was applied.

Then, as in the first-stage cooling, the function f$_L$ is corrected also in the second-stage cooling to enhance accuracy of the function f$_L$. Broken lines in Fig. 4 indicate the corrected functions f$_L$ obtained by shifting the function f$_L$ in Fig. 3 to the right side with the relationships of S' = (1.1 × S), S' = (1.2 × S), and S' = (1.3 × S), respectively. The plotted points marked with filled circles "●" and filled rhombuses "♦" in Fig. 4 indicate measured values of the V/S value and the cooling time length "t$_L$" at the time of the quenching when a shape of the specimen is changed to a protruding shape like the fixed insert illustrated in Fig. 5. The plotted points indicated by open circles "o" and open rhombuses "◊" are calculated and checked results using the CAE calculation based on the measured values marked with filled circles "●" and filled rhombuses "♦". Even in the second-stage cooling, the function "f$_L$" was corrected by an amount of correction of "S'= (1.3 × S)", and thus corrected function f$_L$ was adopted. It was confirmed that the corrected function f$_L$

is a linear function of "t$_L$ = 0.6762 (V/S) - 6.2818" (the unit of t$_L$ is "minute", the unit of V is "mm$^3$", and the unit of S is "mm$^2$").

<Fourth Step>

The volume V$_1$ and the surface area S$_1$ of the fixed insert as a steel material to be quenched, illustrated in Fig. 5, were obtained. As described above, the volume V$_1$ was 113,043,680 mm$^3$ and the surface area S was 2,205,144 mm$^2$. Here, it was assumed that no fine voids such as a cooling hole exist inside the fixed insert. Then, the V/S value of the fixed insert in Fig. 5 is determined to be 51.26 calculated by (113,043,680 mm$^3$/2,205,144 mm$^2$), the unit of which is "mm".

Then, the fixed insert illustrated in Fig. 5 was multi-stage- quenched with two-stage cooling under the same cooling conditions as that of the quenching test with the specimen. At this time, the V/S value 51.26 of the fixed insert was substituted in the corrected function "f$_H$" of "t$_H$ = 0.6572 (V/S) - 9.9774" for the first-stage cooling and into the corrected function "f$_L$" of "t$_L$ = 0.6762 (V/S) - 6.2818" for the second-stage cooling.

As a result, the cooling time length "t$_H$1" taken to cool the central portion of the fixed insert from the quenching temperature (Ts$_H$) of 1020°C to 650°C (Te$_H$) in the first-stage cooling was calculated to be 23.71 minutes. Practically, the cooling time length t$_H$1 of 23.71 minutes was rounded to 24 minutes for easy control. The cooling rate during the actually managed cooling time length t$_H$1 was [(1020 - 650)/24] = 15.4°C/minute. This rate exceeded the cooling rate R of 13.5°C/minute as described above.

The cooling time length "t$_L$1" taken to cool the temperature of the central portion of the fixed insert from 600°C (Ts$_L$) until the quenching ending temperature (Te$_L$) of 250°C in the second-stage cooling was calculated to be 28.38 minutes. Practically, the cooling time length "t$_L$1" of 28.38 minutes was rounded to 28 minutes. The cooling rate during the cooling time length "t$_L$1" was [(600 - 250)/28] = 12.5°C/minute. The rate satisfied the range "7.5 to 13.0°C/ minute" that is between the cooling rates R and R'.

As the above, when the steel type A is quenched under the initially set cooling condition C by two-stage cooling with the cooling time lengths "t$_H$1" and "t$_L$1", it is considered that sufficient martensitic transformation will be generated and cracking is suppressed in the structure of the fixed insert after the quenching. Therefore, it was determined that it is not necessary to rreconsider the steel type A and cooling condition C.

Then, the fixed insert of Fig. 5 made of steel type A being SKD 61 was actually subjected to multi-stage quenching with two-stage cooling under the initially set quenching pattern and cooling condition C. The cooling time length "t$_H$1" in the first-stage cooling was set to 24 minutes , and the cooling time length "t$_L$1" in the second-stage cooling was set to 28 minutes as described above.

The fixed insert after the quenching was observed to confirm that the metal structure was sufficiently martensitic-transformed and cracking was not generated. In addition, overcooling was prevented by setting the correction of the function "f" to a larger value.

From the above, it was found that quenching cooling until the instructed temperature can be efficiently controlled, according to the present invention, with use of the cooling time length even when steel materials have various sizes and shapes. It was also found that the cooling rate at the central portion of the steel materials can be easily estimated in quenching the steel materials having various sizes and shapes. When the steel material quenched by the method according to the present invention is further tempered, the steel material can have mechanical properties such as hardness and toughness.

**Claims**

1. A method for deriving a cooling time length in advance of quenching of a steel material, the cooling time length being from a start of the cooling of the steel material heated at a cooling start temperature Ts under a cooling condition C until the cooling is stopped, the method comprising:

   a first step of preparing n pieces of specimens, wherein n is a natural number of two or more, made of a same steel type A as the steel material to be quenched and having different volumes V and different surface areas S with each other, and then making a hole at each of the specimens for inserting a temperature sensor at a central portion of the specimen;
   a second step of inserting the temperature sensor in the hole of each specimen, and subjecting each of the n specimens to a test, wherein the test comprises:

      heating the specimen and maintain at a cooling start temperature Ts;
      starting cooling of the specimen under the same cooling condition C; and
      measuring a cooling time length t from the start of the cooling until the temperature at the central portion of the specimen measured by the temperature sensor reaches a cooling stop temperature Te;

   a third step of determining a function f satisfying Relational Expression 1: $t = f(V/S)$, from n sets of data obtained in the second step, each set of data including the volume V, the surface area S and the cooling time length t; and
   a fourth step of substituting a volume $V_1$ and a surface area $S_1$ of a shape $F_1$ of the steel ma-

terial to be quenched in the Relational Expression 1 to calculate a cooling time length $t_1$.

2. A method for quenching a steel material using the cooling time length $t_1$ derived by the method according to claim 1, comprising
   cooling the steel material heated at the cooling start temperature Ts for the cooling time length $t_1$ under the cooling condition C, and
   then stopping the cooling.

3. The method according to claim 2, wherein the cooling includes multiple stages having different cooling conditions with each other, and the function f for each stage is determined for deriving the cooling time length of each cooling stage.

4. A method for quenching and tempering a steel material, comprising tempering the steel material quenched by the method according to claim 2 or 3.

# FIG.1

# FIG.2

# FIG.3

# FIG.4

## FIG.5

## FIG.6

## FIG.7

## FIG.8

## INTERNATIONAL SEARCH REPORT

International application No.

PCT/JP2016/068223

A. CLASSIFICATION OF SUBJECT MATTER
*C21D11/00*(2006.01)i, *C21D1/18*(2006.01)i, *C22C38/00*(2006.01)n, *C22C38/06* (2006.01)n

According to International Patent Classification (IPC) or to both national classification and IPC

B. FIELDS SEARCHED

Minimum documentation searched (classification system followed by classification symbols)
C21D11/00, C21D1/00-1/84, C21D6/00-6/04, C21D9/00-9/44, C22C38/00, C22C38/06

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-188734 A (Daido Steel Co., Ltd.), 25 July 1995 (25.07.1995), (Family: none) | 1-4 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 September 2016 (06.09.16) | 20 September 2016 (20.09.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

## REFERENCES CITED IN THE DESCRIPTION

### Patent documents cited in the description

- JP 2008031530 A
- JP 2006342368 A
- JP 10080746 A